# DEMANDE DE BREVET EUROPEEN

(11) **EP 4 390 561 A1**
(43) Date de publication de la demande: **26.06.2024**
(21) Numéro de dépôt: 22215944.4
(22) Date de dépôt: 22.12.2022
(51) Int. Cl.: G04B 19/30, G04G 17/02

(54) **PIÈCE D HORLOGERIE À ILLUMINATION LOCALISEE**

(71) Demandeur: ETA SA Manufacture Horlogère Suisse, 2540 Grenchen (CH)
(72) Inventeur: HUOT-MARCHAND, Sylvain, 2743 Eschert (CH); DUBUGNON, Dominique, 1162 Saint-Prex (CH)
(74) Mandataire: ICB SA

(57) **Abrégé**

L'invention concerne une pièce d'horlogerie (1) comportant au moins un élément d'habillage (2a, 2b, 2c) comprenant une face visible (20a) formée d'un corps transparent ou translucide comportant un dispositif d'éclairage autonome (3), ledit élément d'habillage (2a, 2b, 2c) étant formé par un assemblage (9a, 9b) d'une pluralité de couches superposées (10, 11, 12, 13, 14) reliées entre elles comportant chacune un ou plusieurs éléments fonctionnels suivants dudit dispositif d'éclairage (3) :
- au moins une source lumineuse (4) susceptible de générer une lumière dans la face visible (20a) de l'élément d'habillage (2a, 2b, 2c) ;
- une unité d'alimentation électrique autonome (21), et
- une unité de contrôle (7) configurée pour gérer le fonctionnement de la source lumineuse (4) ;
ladite au moins une source lumineuse (4) étant configurée pour produire une lumière localisée sur une zone ponctuelle ou quasi-ponctuelle (28) de la face visible (20a) de l'élément d'habillage (2a, 2b, 2c), de sorte à produire une illumination localisée sur ledit élément d'habillage (2a, 2b, 2c).

## Description

### Domaine technique de l'invention

La présente invention concerne une pièce d'horlogerie à illumination localisée comprenant au moins un élément d'habillage doté d'un dispositif d'éclairage totalement autonome. Plus précisément, la présente invention concerne une pièce d'horlogerie présentant des jeux de lumière localisés originaux, dans un but fonctionnel, esthétique et/ou ludique.

### Arrière-plan technologique

Créer des pièces d'horlogerie telles que des montres bracelets présentant un aspect esthétique amélioré est une préoccupation de tous les instants chez les fabricants horlogers et notamment chez les personnes chargées de concevoir les divers éléments d'habillage. Il serait trop long de dresser ici la liste de toutes les solutions qui ont été envisagées pour impartir à une pièce d'horlogerie un aspect aussi soigné et esthétique que possible. A titre d'exemple seulement, on peut citer la technique du guillochage des cadrans, la forme et/ou la couleur des appliques du cadran ou des aiguilles ou bien encore l'ajout de pierres précieuses ou semi-précieuses.

Dans ce contexte, on comprend qu'il existe un besoin de trouver une solution, qui ne présente pas les inconvénients de l'art antérieur et qui vise à proposer à la clientèle des montres dont l'aspect est tout à la fois esthétique, surprenant et fonctionnel.

### Résumé de l'invention

L'invention pallie les inconvénients de l'art antérieur en procurant une pièce d'horlogerie à illumination localisée en plusieurs points de la pièce, simple à réaliser et présentant des jeux de lumière localisés originaux, dans un but fonctionnel, esthétique et/ou ludique.

A cet effet, la présente invention concerne une pièce d'horlogerie comportant au moins un élément d'habillage comprenant une face visible formée d'un corps transparent ou translucide comportant un dispositif d'éclairage autonome, ledit élément d'habillage étant formé par un assemblage d'une pluralité de couches superposées reliées entre elles comportant chacune un ou plusieurs éléments fonctionnels suivants dudit dispositif d'éclairage :
- au moins une source lumineuse susceptible de générer une lumière dans la face visible de l'élément d'habillage ;
- une unité d'alimentation électrique autonome, et
- une unité de contrôle configurée pour gérer le fonctionnement de la source lumineuse ;
ladite au moins une source lumineuse étant configurée pour produire une lumière localisée sur une zone ponctuelle ou quasi-ponctuelle de la face visible de l'élément d'habillage, de sorte à produire une illumination localisée sur ledit élément d'habillage.

Dans d'autres modes de réalisation :
- ledit assemblage est constitué d'une première couche formant la face visible comprenant ladite au moins une source lumineuse ponctuelle ;
- chaque source de lumineuse ponctuelle est un élément électroluminescent ;
- chaque source de lumineuse ponctuelle est une boîte ou point quantique ;
- ledit assemblage comporte en plus de la première couche les couches successives suivantes :
   ▪ une deuxième couche comprenant un module photovoltaïque constituant l'unité d'alimentation électrique autonome ;
   ▪ une troisième couche comprenant un accumulateur d'énergie électrique constituant l'unité d'alimentation électrique autonome ;
   ▪ une quatrième couche formant une face cachée de l'élément d'habillage comprenant l'unité de contrôle ;
- ledit assemblage comporte en plus de la première couche les couches successives suivantes :
   ▪ une deuxième couche comprenant un module photovoltaïque constituant l'unité d'alimentation électrique autonome, et
   ▪ une troisième couche formant une face cachée de l'élément d'habillage comportant l'unité de contrôle et un accumulateur d'énergie électrique constituant l'unité d'alimentation électrique autonome ;
- les éléments fonctionnels sont imprimés sur des substrats constituants les couches de l'assemblage formant ledit au moins un élément d'habillage ;
- la première couche est rigide relativement aux autres couches comprises dans l'assemblage qui sont souples ;
- les sources lumineuses ponctuelles sont configurées de telle sorte que chaque zone ponctuelle ou quasi-ponctuelle de la face visible susceptible d'être illuminée est apte à être éclairée par une seule source lumineuse ponctuelle monochrome ;
- les sources lumineuses ponctuelles sont configurées de telle sorte que chaque zone ponctuelle ou quasi-ponctuelle de la face visible susceptible d'être illuminée est apte à être éclairée par plusieurs sources lumineuse ponctuelles présentant des couleurs lumineuses distinctes ;
- ledit au moins un élément d'habillage est choisi par un des éléments suivants : un fond, une carrure, un cadran, un brin de bracelet, une lunette, un réhaut, un bouton-poussoir, une couronne de remontoir et/ou une couronne de remontoir munie d'une coiffe.

### Brève description des figures

Les buts, avantages et caractéristiques de la pièce d'horlogerie selon l'invention apparaîtront mieux dans la description suivante sur la base d'au moins une forme d'exécution non limitative illustrée par les dessins sur lesquels :
- la figure 1 est une vue en coupe d'une boîte d'une pièce d'horlogerie équipée d'un élément d'habillage tel qu'un cadran pourvu d'un dispositif d'éclairage autonome selon des modes de réalisation de l'invention ;
- la figure 2 représente une vue éclatée d'une première variante de l'assemblage de quatre couches superposées formant ledit cadran pourvu du dispositif d'éclairage autonome, lesdites couches comportant chacune un ou plusieurs éléments constitutifs du dispositif d'éclairage selon les modes de réalisation de l'invention ;
- la figure 3 représente une vue schématique de cette première variante de l'assemblage de couches formant le cadran pourvu du dispositif d'éclairage autonome selon les modes de réalisation de l'invention ;
- la figure 4 représente une vue éclatée d'une deuxième variante de l'assemblage comprenant trois couches superposées formant ledit cadran pourvu du dispositif d'éclairage autonome, lesdites couches comportant chacune un ou plusieurs éléments constitutifs du dispositif d'éclairage selon les modes de réalisation de l'invention ;
- la figure 5 représente une vue schématique de cette deuxième variante de cet assemblage de couches formant le cadran pourvu du dispositif d'éclairage autonome, selon les modes de réalisation de l'invention, et
- les figures 6 à 8 sont des vues de dessus de pièces d'horlogerie comprenant chacune un élément d'habillage tel qu'une lunette comportant une pluralité de sources lumineuses, selon les modes de réalisation de l'invention.

### Description détaillée de l'invention

La présente invention procède de l'idée générale inventive qui consiste à loger une ou plusieurs sources lumineuses 4 ponctuelles dans au moins un élément d'habillage 2a, 2b, 2c d'une pièce d'horlogerie 1. Cet élément d'habillage 2a, 2b, 2c comprend une face visible 20a formée d'un corps transparent ou translucide qui est aussi appelée « partie visible » ou encore « partie supérieure visible », et comprend également une face cachée 20b autrement appelée « partie cachée » ou « partie inférieure cachée » de cet élément 2a, 2b, 2c. Dans cette configuration, la lumière produite par chaque source lumineuse 4 est localisée dans une zone ponctuelle ou quasi-ponctuelle 28 de cette face visible 20a de l'élément d'habillage 2a, 2b, 2c concerné, de sorte à produire une illumination localisée sur ledit élément d'habillage 2a, 2b, 2c. On procure ainsi une pièce d'horlogerie 1 à illumination localisée en plusieurs points de la pièce 1, simple à réaliser et présentant des jeux de lumière localisés originaux, dans un but fonctionnel, esthétique et/ou ludique. Lorsque l'illumination est enclenchée, les zones de lumière localisées 28 sur l'élément d'habillage 2a, 2b, 2c transmettent une lumière plus ou moins forte et diffuse selon la construction et la puissance lumineuse installée, créant ainsi des effets fonctionnels et/ou esthétiques, par contraste avec les parties non éclairées de l'élément d'habillage 2a, 2b, 2c.

On notera qu'une telle illumination peut avoir un aspect plus ou moins diffus, discret, doux et agréable, ces caractéristiques pouvant être variées pratiquement à l'infini selon le rendu esthétique désiré, ce qui augmente la qualité esthétique finale de la pièce d'horlogerie 1.

Une telle pièce d'horlogerie 1 selon l'invention peut être par exemple une montre électronique, électromécanique et/ou mécanique, et notamment une montre sportive ou une montre dite « de luxe ».

Dans le contexte de cette invention une « zone ponctuelle ou quasi-ponctuelle » comprend toute zone localisée sur/dans la face visible 20a du corps de l'élément d'habillage 2a, 2b, 2c concerné, et présente des dimensions telles qu'elle est perçue comme distincte des zones voisines par un oeil humain.

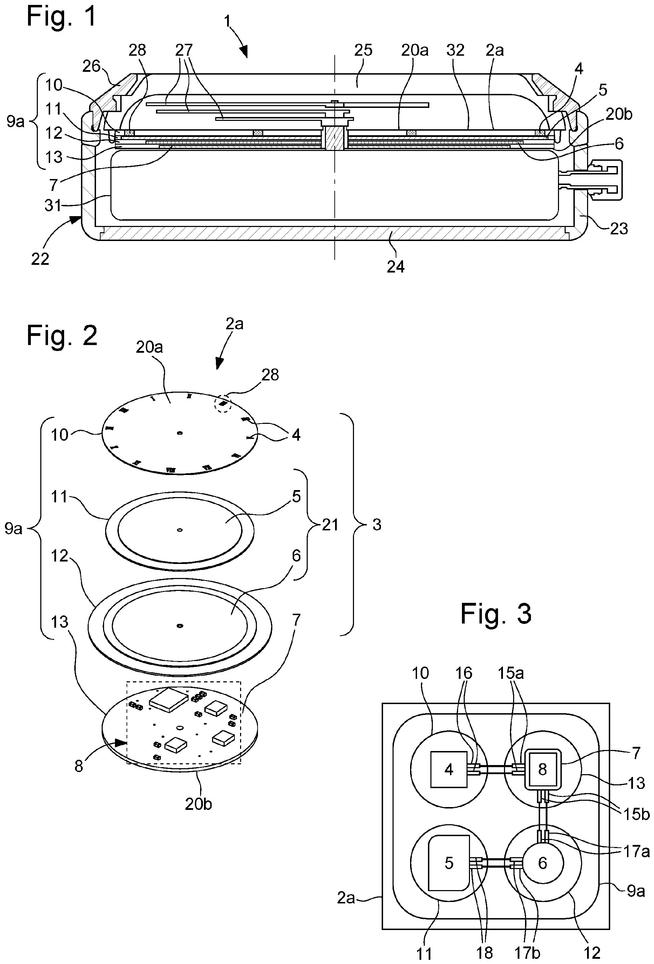

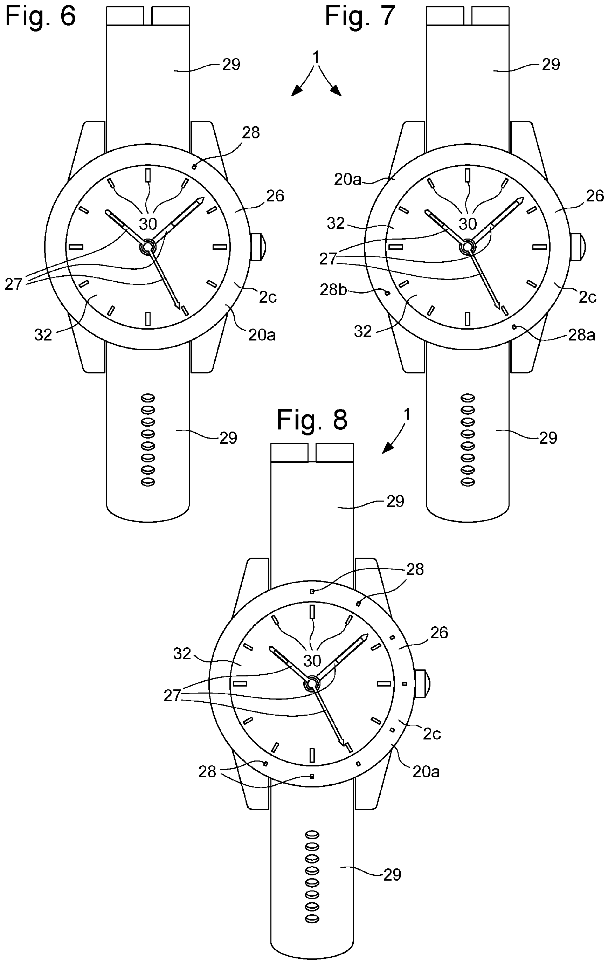

Dans cette pièce d'horlogerie, les éléments d'habillage 2a, 2b, 2c, correspondent à l'ensemble des parties constitutives de la pièce d'horlogerie 1 entourant un mouvement 31, donnant ainsi à cette pièce 1 son esthétique et son style, permettant aussi l'indication de toutes ses fonctions. Plus précisément et en référence aux figures 1 et 6, ces parties constitutives ici considérées comprennent de manière non exhaustive et non limitative : un fond 24, une carrure 23, un cadran 32, des brins de bracelet 29, une lunette 26, un bouton-poussoir, un réhaut, une aiguille, une couronne de remontoir et/ou une coiffe de couronne

Dans la description suivante, toutes les parties de la pièce d'horlogerie 1 qui sont bien connues de l'homme du métier ne seront expliquées que de manière simplifiée.

La figure 1 est une vue en coupe d'une carrure délimitant avec un fond 24 et un cadran 32, un volume intérieur d'une boîte 22 de cette pièce d'horlogerie 1. La boîte 22 est fermée sur le dessus par une glace 25. Pour les besoins de la présente description, on imaginera que la pièce d'horlogerie 1 est une montre mécanique et que son mouvement 31 est disposé dans la boîte 22. Dans cette configuration au moins un élément d'habillage 2a, 2b, 2c de cette pièce 1 comprend un dispositif d'éclairage autonome 3 (visible sur les figures 1, 2 et 4) pourvue d'au moins une source lumineuse ponctuelle 4. La lumière produite par cette dite au moins une source 4 éclaire une zone ponctuelle ou quasi-ponctuelle 28 de l'élément d'habillage 2a, 2b, 2c, à éclairer, à savoir le cadran 32 dans le mode de réalisation particulier de la figure 1 ou la lunette 26 dans un mode de réalisation des figures 6 à 8. Pour ce faire, la lumière issue de chaque source lumineuse 4 ponctuelle peut par exemple être collimatée ou focalisée vers la zone ponctuelle ou quasi-ponctuelle 28 en question, par tout moyen de collimation ou focalisation connu.

On notera que dans l'exemple de réalisation de l'invention décrit, le mouvement horloger 31 est un mouvement mécanique. Dans une variante ce mouvement 31 peut être un mouvement électronique ou encore un mouvement électromécanique. On peut ici parler d'une montre mécanique lorsque son mouvement est mécanique et de montres électromécanique et électronique lorsqu'elles comportent respectivement des mouvements électromécanique et électronique.

Dans cette configuration, le mouvement horloger 31 entraîne de façon connue de l'homme du métier des aiguilles 27 comprenant une aiguille des heures, une aiguille des minutes et éventuellement une aiguille des secondes. A cet effet, le cadran 32, 2a, 2b comporte un trou traversant recevant l'axe des aiguilles.

Dans le mode de réalisation particulier de la figure 1, l'élément d'habillage 2a, 2b ici un cadran 32 comprend donc le dispositif d'éclairage autonome 3. Ce dispositif d'éclairage 3 comprend ses propres moyens d'alimentation électrique comme nous le verrons par la suite. Un tel dispositif d'éclairage 3 est dit autonome notamment par rapport au mouvement 31 de la pièce d'horlogerie 1 et en particulier de la source énergétique de ce mouvement 31, par exemple lorsque cette source énergétique est une alimentation électrique comme dans un mouvement électromécanique ou encore un mouvement électronique. Dans ces conditions, on comprend que l'énergie utilisée par ce dispositif d'éclairage 3 ne se fait pas au détriment de l'autonomie du mouvement 31.

Ce dispositif d'éclairage 3 comporte les éléments fonctionnels suivants : ladite au moins une source lumineuse ponctuelle 4 aussi appelée source de lumineuse ponctuelle, une unité d'alimentation électrique 21 et une unité de contrôle 7.

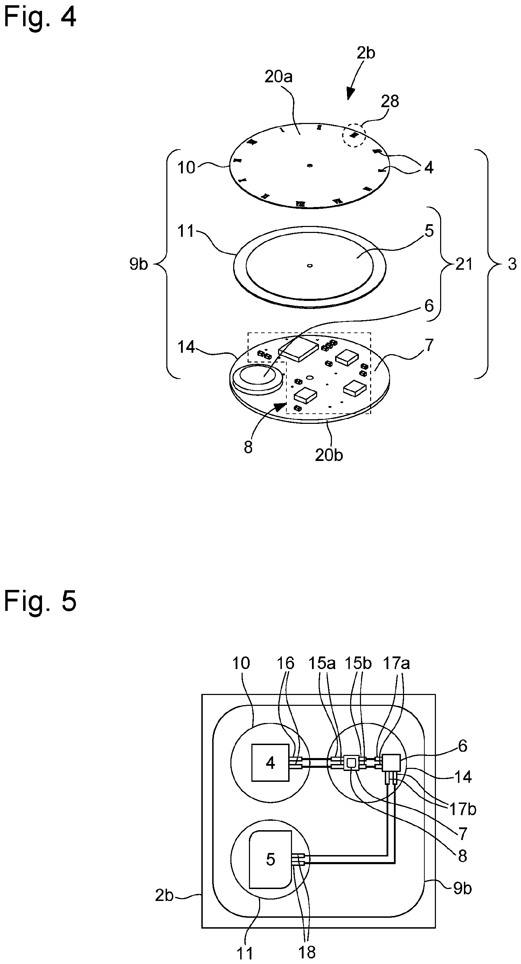

Dans ce dispositif d'éclairage 3, l'unité d'alimentation électrique 21 comprend un accumulateur d'énergie électrique 6 et un module photovoltaïque 5 aussi appelées cellules solaires. Ce module photovoltaïque 5 est relié à l'accumulateur d'énergie électrique 6 via des éléments de connexions référencés 17b et 18 sur les figures 3 et 5. Ce module photovoltaïque 5 peut comprendre une ou des cellules élémentaires du type à hétérojonction ou multijonction, connectées en parallèle ou en série. Les cellules photovoltaïques de ce module 5, peuvent être réalisées, de manière connue de l'homme du métier, à partir de matériaux semi-conducteur à base de cuivre, d'indium, de gallium et de sélénium, à base de tellurure de cadmium, à base d'arséniure de gallium monocristallin ou à base de silicium monocristallin ou polycristallin, ou à pérovskites. Il y a lieu de noter que ces exemples sont non limitatifs et que l'homme du métier saura trouver le type de cellules photovoltaïques adapté à l'invention.

Dans ce dispositif d'éclairage 3, l'unité de contrôle 7 aussi appelée microcontrôleur, comporte un circuit électronique 8 comprenant des ressources matérielles en particulier au moins un processeur coopérant avec des éléments de mémoire ainsi que des bus d'adresses, de données et de contrôle. Cette unité de contrôle 7 comprend dans ses éléments de mémoire un algorithme de gestion de l'illumination de ladite au moins une source lumineuse 4. Un tel algorithme est exécuté par le processeur de cette unité de contrôle 7 en tenant compte notamment de données provenant de capteurs d'évènement compris dans le dispositif d'éclairage 3 afin d'assurer la gestion du fonctionnement de ladite au moins une source lumineuse 4.

On notera que de telles données peuvent par exemple apporter des informations relatives à des évènements détectés par ces capteurs, lesdits évènements étant susceptibles de contribuer au fonctionnement de ladite au moins une source lumineuse 4. Ces évènements peuvent comprendre de manière non limitative et non exhaustive: la détection d'un niveau de luminosité particulier dans l'environnement de la pièce d'horlogerie 1, la détection d'un élément sonore particulier ou d'un niveau sonore particulier, la détection d'un objet visuel particulier, la détection d'un mouvement effectué par cette pièce 1, etc.

Dans ce contexte, le capteur d'évènement de ce dispositif d'éclairage autonome 3, comprend en particulier et de manière non limitative et non exhaustive :
- un capteur de luminosité permettant de détecter le niveau de luminosité ambiante ;
- un capteur de mouvement tel qu'un capteur gyroscopique et/ou inertiel sous la forme d'un composant électronique de type circuit microsystèmes électromécaniques gyroscopique et/ou inertiel ;
- un capteur sonore de type microphone, et/ou
- un capteur optique de type capteur photographique.

Par ailleurs, on notera que cette unité de contrôle 7 est apte à gérer/contrôler le fonctionnement des sources lumineuses 4 de manière simultanée et/ou en séquence. De plus chaque source lumineuse 4 est gérée/contrôlée par cette unité de contrôle de manière distincte. Dans ce contexte, la gestion du fonctionnement de chaque source lumineuse 4 peut consister de manière non limitative et non exhaustive en la réalisation des opérations suivantes : un allumage ou une extinction séquentiel (le), un allumage ou une extinction simultané (e) de deux ou plusieurs sources lumineuses 4, un clignotement d'une ou de plusieurs sources lumineuses 4, une définition d'une fréquence de clignotement pour chaque source lumineuse 4, une durée de clignotement pour chaque source lumineuse 4, une durée d'allumage ou d'extinction pour chaque source lumineuse 4, etc.

Une telle unité de contrôle 7 peut aussi comprendre dans ses éléments de mémoire un algorithme de gestion de l'accumulateur d'énergie électrique 6 en particulier la gestion de son rechargement par le module photovoltaïque 5 et la gestion de la consommation électrique par ladite source lumineuse 4.

En référence aux figures 2 à 8 et ainsi que nous l'avons évoqué précédemment, le dispositif d'éclairage autonome 3 est donc compris dans l'élément d'habillage 2a, 2b, 2c. Dans cette configuration, les éléments fonctionnels de ce dispositif d'éclairage 3 à savoir la source lumineuse 4, l'accumulateur d'énergie électrique 6, le module photovoltaïque 5 et l'unité de contrôle 7, sont inclus dans une ou plusieurs couches 10, 11, 12, 13, 14 formant l'élément d'habillage 2a, 2b, 2c.

Autrement dit, le corps de cet élément d'habillage 2a, 2b, 2c est formé par un assemblage 9a, 9b d'une pluralité de couches superposées 10, 11, 12, 13, 14 reliées entre elles et comportant chacune un ou plusieurs éléments fonctionnels du dispositif d'éclairage 3.

Dans cet assemblage 9a, 9b, les couches 10, 11, 12, 13, 14 sont reliées entre elles par un élément de liaison tel qu'une substance adhésive de manière à les unifier afin obtenir un assemblage 9a, 9b monolithique formant ainsi un élément d'habillage monobloc 2a, 2b. De telles couches 10, 11, 12, 13, 14 sont superposées dans l'assemblage 9a, 9b, en étant agencées les unes au-dessus des autres selon un ordre défini.

Ainsi un tel élément d'habillage monobloc 2a, 2b, 2c (p. ex. : cadran, lunette), présente en outre l'avantage de pouvoir être monté de manière amovible sur une boite de pièce d'horlogerie 1 en plus de faciliter son intégration dans ou sur une telle boite.

Plus précisément, dans des première et deuxième variantes, cet assemblage 9a, 9b comprend une première couche 10 formant/constituant une face visible 20a de l'élément d'habillage 2a, 2b, 2c. Une telle première couche 10 est formée par un substrat transparent ou translucide ou au moins partiellement transparent ou au moins partiellement translucide qui est rigide ou semi-rigide. Un tel substrat est réalisé en une matière présentant une transmittance aux rayonnements lumineux tels que des rayonnements solaires en particulier aux rayonnements ultraviolets aussi appelée UVT (pour « Ultra-Violet Transmission ») qui est comprise entre 65 et 95 pourcent. Cette transmittance est de préférence de 85 pourcent. Un telle matière peut être transparent ou translucide. Cette matière peut être de manière non limitative et non exhaustive un polymère, du verre ou encore de la céramique.

Dans ce contexte, on comprend que ce substrat est configuré pour que :
- la lumière produite par ladite au moins une source lumineuse 4 puisse s'échapper vers l'extérieur de l'élément d'habillage 2a, 2b, 2c et donc de la pièce d'horlogerie 1, et
- la lumière provenant de l'environnement de la pièce d'horlogerie 1 puisse pénétrer dans l'élément habillage 2a, 2b, 2c en direction du module photovoltaïque 5 du dispositif d'éclairage 3, cette lumière comprenant des rayonnements solaires lorsqu'elle est d'origine naturelle.

Autrement dit, ce substrat transparent ou translucide est configuré pour être traversé par un rayonnement lumineux tel qu'un rayonnement solaire susceptible d'alimenter le module photovoltaïque 5 afin que ce dernier puisse convertir l'énergie solaire provenant de ce rayonnement en énergie électrique.

Une telle première couche 10 comporte ladite au moins une source lumineuse 4 du dispositif d'éclairage 3 de l'élément d'habillage 2a, 2b, 2c.

Dans ce dispositif 3, tout type de source lumineuse ponctuelle 4, telle qu'un élément électroluminescent peut être utilisé comme par exemple :
- un condensateur électroluminescent plus connu sous l'acronyme LEC pour « Light-Emitting Capacitor » ;
- une diode électroluminescente de type LED (pour « Light-Emitting Diode »), OLED (pour « Organic Light-Emitting Diode »), AMOLED (pour « Active-Matrix Organic Light-Emitting Diode ») ou encore QLED (pour « Quantum Light-emitting diode » ;
- tout matériau électroluminescent activé par un champ électrique local ;
- tout matériau électroluminescent activé par un courant électrique ;
- toutes combinaisons de ces éléments électroluminescents.

Cette dite au moins une source lumineuse 4 est agencée de manière particulière sur ou dans le substrat formant cette première couche 10. Un tel agencement de la source lumineuse 4 est configuré pour assurer un éclairage de tout ou partie de la face visible 20a de l'élément d'habillage 2a, 2b, 2c. Par exemple, lorsque cet élément d'habillage 2a, 2b, 2c est un cadran 32 come sur la figure 1 ou encore une lunette 26 comme sur les figures 6 à 8, il peut s'agir d'un éclairage de tout ou partie de la face visible 20a de ce cadran 32, 2a, 2b ou de la lunette 26, 2c, ou encore d'un éclairage d'au moins une représentation graphique présent dans ou sur la surface inférieure de cette face visible 20a telle que :
- un élément de repère (ou d'affichage) comme par exemple un chiffre, un index, un trait ou encore un point contribuant à participer avec/sans les aiguilles à l'affichage d'une information/grandeur horlogère ou d'une information/grandeur physique mesurée par un capteur ou similaire compris dans le mouvement 31 ;
- une inscription, un motif, un texte, un logo, etc.

Cet éclairage peut être un éclairage de type rétroéclairage ou semi-direct lorsque la source lumineuse 4 est agencée dans une cavité définie dans le substrat. Plus précisément, cette cavité pouvant être une ouverture borgne réalisée dans la surface inférieure de ce substrat. Dans cette configuration, lorsque le fond de cette cavité comprend une représentation graphique, le rayonnement lumineux, ou la lumière, produit par cette source lumineuse 4 peut s'échapper vers l'extérieur du cadran 2a via la face visible 20a de ce cadran 2a, autorisant ainsi la visualisation d'au moins une représentation graphique dans l'obscurité. En particulier, le rayonnement lumineux en s'échappant ainsi de la face visible 20a, vient dessiner le contour de cette représentation graphique. Dans ce contexte, cette représentation graphique comprise dans ou sur la surface supérieure ou encore sur la surface inférieure du substrat formant la première couche 10, est de préférence opaque ou non translucide ou non transparente.

Cet éclairage peut être un éclairage direct lorsque la source lumineuse 4 est agencée dans une cavité définie dans le substrat. Cette cavité peut être une ouverture borgne réalisée dans la surface inférieure de ce substrat et dont le fond est dépourvu de toute représentation graphique. Dans cette configuration, le rayonnement lumineux, ou la lumière, produit par cette source lumineuse 4 peut s'échapper par le fond de cette cavité vers l'extérieur du cadran 2a et donc par la face visible 20a de ce cadran 2a.

Cet éclairage peut aussi être un éclairage direct lorsque la source lumineuse 4 est agencée dans une ouverture traversante réalisée dans le substrat. Dans ce contexte, cette ouverture s'étend alors dans l'épaisseur du substrat de cette première couche 10, en débouchant en ses deux extrémités respectivement dans les surfaces supérieure et inférieure de ce substrat. Dans cette configuration, tout ou partie de la source lumineuse 4 peut faire saillie de la surface supérieure de ce substrat et donc de la face visible 20a de cet élément d'habillage 2a, 2a, 2c.

Un tel éclairage peut également être un éclairage indirect lorsque ladite au moins une source lumineuse 4 est couplée à au moins un guide d'ondes. Ce guide d'onde encore appelé guide de lumière permet d'amener la lumière depuis le point où elle injectée dans le guide jusqu'au niveau de la zone ponctuelle ou quasi-ponctuelle 28 de l'élément d'habillage 2a, 2b, 2c à éclairer. Le guide de lumière est par exemple une fibre optique qui permet de contourner les éventuels obstacles qui peuvent se dresser dans le substrat entre l'élément électroluminescent et la zone ponctuelle ou quasi-ponctuelle 28 considérée du substrat par laquelle la lumière va s'échapper. Dans cette variante de réalisation, c'est donc la lumière qui est amenée, via le guide d'ondes, depuis l'élément électroluminescent jusqu'à la zone ponctuelle ou quasi-ponctuelle 28 du substrat à éclairer.

Dans une telle configuration, une première extrémité du guide d'ondes est couplée avec la source lumineuse 4 et une deuxième extrémité de ce guide peut être agencée dans :
- une cavité pouvant être une ouverture borgne réalisée dans la surface inférieure du substrat de cette première couche 10, ou
- une ouverture traversante s'étendant dans l'épaisseur du substrat de la première couche 10 et débouchant en ses deux extrémités respectivement dans les surfaces supérieure et inférieure de ce substrat et donc de la première couche 10. Ainsi cette deuxième extrémité peut faire saillie de la surface supérieure de ce substrat et donc de la face visible 20a de l'élément d'habillage 2a, 2b, 2c.

Dans ce contexte, l'éclairage indirect peut être réalisé par une seule source lumineuse 4 comprise sur la surface inférieure du substrat de cette première couche 10 en étant couplée à plusieurs guides d'ondes dont les deuxièmes extrémités sont agencées dans :
- des cavités émettant chacune un rayonnement lumineux, provenant de cette source lumineuse 4, ce rayonnement s'échappant vers l'extérieur de l'élément d'habillage 2a, 2b, 2c via sa face visible 20a en autorisant ainsi la visualisation d'au moins une représentation graphique située dans le fond de cette cavité en particulier dans l'obscurité, et/ou
- des ouvertures traversantes en faisant saillie ou pas de la surface supérieure du substrat de cette première couche 10 afin de former des représentations graphiques tels que des éléments de repères, en émettant chacune un rayonnement lumineux, provenant de cette source lumineuse 4.

Dans le substrat de cette première couche 10, la source lumineuse 4 est appliquée/fixée sur la surface inférieure de ce substrat, dans ladite cavité ou sur une paroi interne de l'ouverture traversante évoquée précédemment et ce, par impression ou évaporation.

Dans un mode particulier de réalisation de l'invention, on utilise des éléments électroluminescents émettant chacun de la lumière ultraviolette, violette, bleue, blanche ou infrarouge en combinaison avec le substrat de la première couche 10 formant la face visible 20a de l'élément d'habillage 2a, 2b, 2c et comprenant un matériau au moins partiellement transparent ou translucide, chargé de particules fluorescentes et/ou phosphorescentes. Ce substrat de la première couche 10 est chargé à l'endroit ou aux endroits où l'on souhaite que la lumière s'échappe depuis l'intérieur ou la face inférieure du substrat. De la sorte, les particules fluorescentes et/ou phosphorescentes absorbent le rayonnement émis par chaque élément électroluminescent et réémettent une lumière visible homogène. En fonction du type de particules choisi, fluorescentes et/ou phosphorescentes, l'effet lumineux cesse aussitôt après extinction de la source lumineuse 4 ou au contraire se poursuit par effet de rémanence. En variante non représentée sur les figures, les sources lumineuses ponctuelles peuvent être des boîtes ou points quantiques (appelés respectivement « quantum box » ou « quantum dot » en anglais).

Dans un mode particulier de réalisation de l'invention, chaque source lumineuse 4 ponctuelle est une source de lumineuse monochrome, et chaque zone ponctuelle ou quasi-ponctuelle 28 du substrat de la première couche 10 susceptible d'être éclairée, l'est alors par une seule source lumineuse 4 ponctuelle monochrome. Dans un autre mode de réalisation de l'invention, les sources lumineuses 4 ponctuelles sont configurées pour présenter des couleurs lumineuses distinctes, et chaque zone ponctuelle ou quasi-ponctuelle 28 du substrat, susceptible d'être éclairée, l'est alors par plusieurs de ces sources lumineuses 4 ponctuelles. On notera dans un autre mode de réalisation que chaque source lumineuse 4 peut varier entre différentes couleurs.

En outre, on notera que la surface inférieure de cette première couche 10 peut être autocollante afin de participer à son assemblage avec la deuxième couche 11.

Dans l'assemblage 9a, 9b formant l'élément d'habillage 2a, 2b, 2c, la deuxième couche 11 comprend un substrat comportant le module photovoltaïque 5. Ce substrat est de préférence flexible ou souple. Un tel substrat peut être un film sur lequel est disposé ce module photovoltaïque 5. A titre d'exemple ce substrat peut être réalisé en un matériau appartenant à la famille des polymères. Un tel module photovoltaïque 5 s'étend préférentiellement sur l'ensemble d'une zone dite active d'une surface supérieure de ce substrat de la deuxième couche 11. Cette zone active est une portion de cette surface supérieure du substrat qui est apte à recevoir la lumière provenant de la surface inférieure de la première couche 10 de l'élément d'habillage 2a, 2b, 2c. Cette lumière qui a traversé tout ou partie de la première couche 10, provient de l'environnement extérieur de l'élément d'habillage 2a, 2b, 2c, et donc de la pièce d'horlogerie 1, ici principalement du rayonnement solaire lorsqu'elle est d'origine naturelle.

On notera que le module photovoltaïque 5 est appliqué sur la surface supérieure de ce substrat à partir de procédés d'impression par jet d'encre ou encore par sérigraphie ou à partir de procédé d'impression par évaporation thermique. On parlera d'ailleurs ici d'une deuxième couche 11 comprenant un module photovoltaïque 5 imprimé. En particulier, d'un module photovoltaïque 5 imprimé sur le substrat de la deuxième couche 11.

Par ailleurs, on remarquera qu'une fois que le module photovoltaïque 5 a été appliqué sur le substrat, une couche d'une substance autocollante ou adhésive peut être déposée sur tout ou partie de la surface supérieure et/ou de la surface inférieure de ce substrat. Dans ces conditions, la deuxième couche 11 peut être une couche autocollante qui participe à faciliter son assemblage/montage/collage avec les autres couches en particulier avec la première couche 10 et/ou une troisième couche 12 de cet assemblage 9a, 9b.

Dans cette première variante, l'assemblage 9a comprend cette troisième couche 12 comportant également un substrat de préférence flexible ou souple, comportant l'accumulateur d'énergie électrique 6 du dispositif d'éclairage autonome 3. Ce substrat peut être un film sur lequel est compris l'accumulateur 6. Un tel substrat peut être réalisé en un matériau appartenant à la famille des polymères.

Cet accumulateur 6 peut être une batterie au lithium ou encore une batterie à semi-conducteurs. Un tel accumulateur 6 est appliqué sur une surface supérieure de ce substrat à partir de procédés connus de l'état de la technique tels que :
- des procédés d'impression sur substrat polymère souple lorsqu'il s'agit par exemple d'une batterie au lithium, ou
- des procédés d'impression tridimensionnelle lorsqu'il s'agit par exemple d'une batterie à semi-conducteurs telle qu'une batterie lithium-métal à semi-conducteurs.

On parlera d'ailleurs ici d'une troisième couche 12 comprenant un accumulateur d'énergie électrique 6 imprimé. En particulier, d'un accumulateur d'énergie électrique 6 imprimé sur le substrat de la troisième couche 12.

Ainsi, de tels procédés permettent d'obtenir une troisième couche 12 comprenant cet accumulateur 6 qui est souple et ultrafine.

En outre, on remarquera qu'une fois l'accumulateur 5 appliqué sur le substrat, une couche d'une substance autocollante ou adhésive peut être déposée sur tout ou partie de la surface supérieure et/ou de la surface inférieure de ce substrat. Dans ces conditions, la troisième couche 12 peut être une couche autocollante qui participe à faciliter son assemblage/montage/collage avec les autres couches en particulier avec la deuxième couche 11 et/ou une quatrième couche 13 de cet assemblage 9a.

On notera que cet accumulateur 6 sert à stocker l'énergie électrique produite par le module photovoltaïque 5 et à la restituer sur demande pour alimenter ladite au moins une source lumineuse 4.

Dans la première variante illustrée sur les figures 1, 2 et 3, cet assemblage 9a comprend cette quatrième couche 13 formant la face cachée 20b de l'élément d'habillage 2a, 2c. Cette quatrième couche 13 est formée par un substrat de préférence flexible ou souple, comportant l'unité de contrôle. Un tel substrat peut être par exemple un PCB flexible sur lequel est agencée cette unité de contrôle 7 en particulier sur la surface supérieure de ce PCB et donc du substrat. Dans ce contexte, l'édification de l'unité de contrôle 7 sur cette surface supérieure du substrat peut être réalisée à partir de procédés d'impression tridimensionnelle ou encore des procédés d'impression sur polymère.

Dans la deuxième variante illustrée sur les figures 4 et 5, l'assemblage 9b formant l'élément d'habillage 2b, 2c, comprend trois couches 10, 11, 14, reliées entre elles. On remarquera que cette deuxième variante se différencie de la première variante en ce qu'elle comprend donc trois couches 10, 11, 14 au lieu de quatre couches 10, 11, 12, 13, comme dans la première variante. Dans cette deuxième variante, l'accumulateur d'énergie électrique 6 du dispositif d'éclairage autonome 3 est maintenant compris dans la troisième et dernière couche 14 de cet assemblage 9b avec l'unité de contrôle 7.

Une telle troisième couche 14 formant la face cachée de l'élément d'habillage 2b, est constituée d'un substrat de préférence flexible ou souple, sur lequel sont édifiés, de préférence sur la surface supérieure de ce substrat, l'accumulateur 6 et le circuit électronique 8 constituant l'unité de contrôle 7. Une telle édification de l'accumulateur 6 et de l'unité de contrôle 7 sur cette surface supérieure du substrat, peut être réalisée à partir de procédés d'impression tridimensionnelle ou encore des procédés d'impression sur polymère. On notera qu'un tel substrat peut être par exemple un PCB flexible.

En résumé dans cette deuxième variante, l'assemblage 9b comprend alors :
- une première couche 10 formant la face visible 20a de l'élément d'habillage 2b, 2c incluant ladite au moins une source lumineuse 4 du dispositif d'éclairage 3 ;
- une deuxième couche 11 incluant le module photovoltaïque 5, et
- la troisième couche 14 formant la face cachée 20b de l'élément d'habillage 2b, 2c incluant l'accumulateur 6 et l'unité de contrôle 7.

On notera que dans cette deuxième variante, les première et deuxième couches 10, 11 sont similaires à celles de la première variante de l'assemblage 9a.

Par ailleurs, en référence aux figures 3 et 5, le circuit électronique 8 de l'unité de contrôle 7 comprend des premiers éléments de connexion 15a qui sont reliés à des éléments de connexion 16 de ladite au moins une source lumineuse 4 pour la gestion du fonctionnement de cette source lumineuse 4. Ce circuit électronique 8 comprend aussi des deuxièmes éléments de connexion 15b reliés à des premiers éléments de connexion 17a de l'accumulateur 6. Cet accumulateur 6 comporte également des deuxièmes éléments de connexion 17b reliés à des éléments de connexion 18 du module photovoltaïque 5.

En outre, on notera que les capteurs d'évènements du dispositif d'éclairage 3, évoqués précédemment sont de préférence agencés dans la première couche 10 et/ou la dernière couche 13, 14 de l'assemblage 9a, 9b en étant reliés à l'unité de contrôle 7 de ce dispositif 3.

En outre, on notera dans une variante non représentée que l'élément d'habillage peut comprendre un assemblage 9a, 9b dont la première couche 10 comporte un substrat en matériau céramique transparent ou translucide comprenant un ou plusieurs inserts en matériau opaque. On peut également prévoir un substrat en matériau céramique mélangeant plusieurs couleurs de céramique à l'injection, notamment via des procédés de bi-injection, au moins une de ces multiples couleurs étant partiellement transparente ou translucide afin de laisser passer la lumière à des endroits prédéterminés et réalisés par le procédé de bi-injection.

Selon une autre variante non représentée, l'élément d'habillage 2a, 2b, 2c et en particulier sa première couche 10 peut comprendre plusieurs sources lumineuses 4 ponctuelles pouvant être combinées avec une ou plusieurs représentations graphiques inscrite (s) dans le substrat en matériau céramique de cette couche 10, à éclairer :
- soit par variation d'épaisseur de la céramique par gravure mécanique ou laser (par exemple un retrait de quelques 10ième ou 100ième de millimètres dans la céramique) ;
- soit à partir d'une méthode de gravure interne dans le substrat notamment par un procédé de gravure laser ;
- soit par variation de densité de la céramique ;
- soit par une impression opaque ou semi-transparente à l'intérieur ou à la surface de l'élément d'habillage en céramique ;
- soit par un dépôt physique en phase vapeur PVD (pour « Physical Vapor Déposition ») ou autre, structuré à l'intérieur ou à la surface de l'élément d'habillage, ou
- soit par une combinaison de ces méthodes.

Ainsi lorsque l'émission lumineuse des sources lumineuses ponctuelles 4 est enclenchée, la représentation graphique normalement invisible apparaît par rétroéclairage sur la face visible de l'élément d'habillage 2a, 2b, 2c.

Par ailleurs, on notera que la pièce d'horlogerie 1 selon la présente invention peut avantageusement être utilisée pour fournir des applications fonctionnelles diverses à un utilisateur de la pièce d'horlogerie 1. A cet effet, l'allumage et l'extinction des sources lumineuses 4 ponctuelles, sont configurés de manière à ce que la pièce d'horlogerie 1 présente, sur l'élément d'habillage 2a, 2b, 2c éclairé par les sources lumineuses ponctuelles 4, au moins une indication visuelle d'une fonction propre à la pièce d'horlogerie 1 et/ou relative à une mesure d'un paramètre extérieur ou d'un paramètre concernant l'utilisateur de la pièce d'horlogerie 1. L'allumage et/ou l'extinction des sources lumineuses ponctuelles 4, peut être commandé(e) par l'unité de contrôle 7 de manière simultanée et/ou en séquence.

A titre d'exemple, en référence à la figure 6, une application fonctionnelle possible est ici illustrée pour la pièce d'horlogerie 1 et ce, lorsqu'une telle pièce 1 est une montre électronique ou électromécanique, et que l'unité de contrôle 7 de son élément d'habillage 2c ici la lunette 26, comprend un module de communication apte à échanger des données avec le mouvement de cette pièce d'horlogerie 1. Sur une zone ponctuelle ou quasi-ponctuelle 28 de cet élément d'habillage 2c ici la lunette 26 de cette pièce 1, une illumination localisée indique l'heure, à savoir 13 heures dans l'exemple illustré. La zone ponctuelle ou quasi-ponctuelle 28 correspond en effet à la position d'un chiffre ou applique 30 sur le cadran 32 de la pièce 1. L'illumination localisée permet notamment la lecture de l'heure dans la nuit.

Une autre application fonctionnelle possible pour cette même pièce d'horlogerie 1 est illustrée sur la figure 7. Sur une première zone ponctuelle ou quasi-ponctuelle 28a de la lunette 26 de cette pièce 1, une première illumination localisée indique l'heure, à savoir 5 heures dans l'exemple illustré. Sur une seconde zone ponctuelle ou quasi-ponctuelle 28b de la lunette 26 de cette pièce 1, une seconde illumination localisée indique les minutes, à savoir 40 minutes dans l'exemple illustré. La seconde illumination (correspondant aux minutes) peut se faire simultanément avec la première illumination (correspondant à l'heure). Les couleurs de lumière sur les première et seconde zones ponctuelles ou quasi-ponctuelles 28a, 28b peuvent être identiques (en cas d'illuminations en séquence) ou différentes (en cas d'illuminations simultanées). Ce dernier cas de figure permet en effet à l'utilisateur de la pièce 1 de pouvoir distinguer l'heure des minutes. Les première et seconde illuminations localisées permettent notamment la lecture de l'heure et des minutes dans la nuit.

Une autre application fonctionnelle possible pour cette pièce d'horlogerie illustrée sur la figure 8. Sur une ou plusieurs zones ponctuelles ou quasi-ponctuelles 28 de la lunette 26 de cette pièce 1, en l'occurrence sur huit zones dans l'exemple illustré, plusieurs illuminations localisées indiquent un compte à rebours ou un chronographe lumineux. Les zones ponctuelles ou quasi-ponctuelles 28 sur la lunette peuvent s'allumer, respectivement s'éteindre, au fur et à mesure du temps écoulé.

Dans chacun des exemples de réalisation illustrés sur les figures 6 à 8, la première couche 10 de l'élément d'habillage 2c ici la lunette 26 comporte typiquement douze éléments électroluminescents permettant d'éclairer une zone ponctuelle ou quasi-ponctuelle 28 sur cette lunette 26, ces zones 28 devenant visibles uniquement lorsqu'elles sont illuminées.

De manière alternative aux exemples de réalisation illustrés sur les figures 6 à 8, les zones ponctuelles ou quasi-ponctuelles 28 d'illumination localisée peuvent être prévues sur le pourtour de la carrure 23 de cette pièce 1, plutôt que sur la lunette 26.

Une autre application fonctionnelle possible pour la pièce d'horlogerie selon l'invention, similaire à celle de la figure 6 mais non représentée sur les figures, consiste afficher la date via une illumination localisée sur une zone ponctuelle ou quasi-ponctuelle 28 de la lunette de la pièce d'horlogerie. La zone ponctuelle ou quasi-ponctuelle 28 correspond en effet à la position d'un chiffre ou applique 30 sur le cadran de la pièce d'horlogerie 1. Pour les dates au-delà de « 12 », les deux chiffres du jour peuvent être indiqués en séquence, suivis du mois (par exemple « 2 » puis « 3 », puis « 1 » pour le 23 janvier). Une couleur lumineuse différente peut être utilisée pour le jour et le mois. L'illumination localisée permet notamment la lecture de la date dans la nuit.

Il va de soi que la présente invention n'est pas limitée aux modes de réalisation qui viennent d'être décrits et que diverses modifications et variantes simples peuvent être envisagées par l'homme du métier sans sortir du cadre de l'invention tel que défini par les revendications annexées.

## Revendications

1. Pièce d'horlogerie (1) comportant au moins un élément d'habillage (2a, 2b, 2c) comprenant une face visible (20a) formée d'un corps transparent ou translucide comportant un dispositif d'éclairage autonome (3), ledit élément d'habillage (2a, 2b, 2c) étant formé par un assemblage (9a, 9b) d'une pluralité de couches superposées (10, 11, 12, 13, 14) reliées entre elles comportant chacune un ou plusieurs éléments fonctionnels suivants dudit dispositif d'éclairage (3) :
- au moins une source lumineuse (4) susceptible de générer une lumière dans la face visible (20a) de l'élément d'habillage (2a, 2b, 2c) ;
- une unité d'alimentation électrique autonome (21), et
- une unité de contrôle (7) configurée pour gérer le fonctionnement de la source lumineuse (4) ;
ladite au moins une source lumineuse (4) étant configurée pour produire une lumière localisée sur une zone ponctuelle ou quasi-ponctuelle (28) de la face visible (20a) de l'élément d'habillage (2a, 2b, 2c), de sorte à produire une illumination localisée sur ledit élément d'habillage (2a, 2b, 2c).

2. Pièce d'horlogerie (1) selon la revendication précédente, **caractérisée en ce que** ledit assemblage (9a, 9b) est constitué d'une première couche (10) formant la face visible (20a) comprenant ladite au moins une source lumineuse ponctuelle (4).

3. Pièce d'horlogerie (1) selon l'une quelconque des revendications précédentes, **caractérisée en ce que** chaque source de lumineuse (4) ponctuelle est :
- un élément électroluminescent ;
- une boîte ou point quantique.

4. Pièce d'horlogerie (1) selon l'une quelconque des revendications précédentes, **caractérisée en ce que** ledit assemblage (9a) comporte en plus de la première couche (10) les couches successives suivantes :
- une deuxième couche (11) comprenant un module photovoltaïque constituant l'unité d'alimentation électrique autonome (21) ;
- une troisième couche (12) comprenant un accumulateur d'énergie électrique (6) constituant l'unité d'alimentation électrique (21) autonome ;
- une quatrième couche formant une face cachée (20b) de l'élément d'habillage (2a, 2c) comprenant l'unité de contrôle (7).

5. Pièce d'horlogerie selon l'une quelconque des revendications 1 à 3, **caractérisée en ce que** ledit assemblage (9b) comporte en plus de la première couche (10) les couches successives suivantes :
- une deuxième couche (11) comprenant un module photovoltaïque constituant l'unité d'alimentation électrique autonome (21), et
- une troisième couche (14) formant une face cachée (20b) de l'élément d'habillage (2b, 2c) comportant l'unité de contrôle (7) et un accumulateur d'énergie électrique (6) constituant l'unité d'alimentation électrique (21) autonome.

6. Pièce d'horlogerie (1) selon l'une quelconque des revendications précédentes, **caractérisée en ce que** les éléments fonctionnels sont imprimés sur des substrats constituants les couches (10, 11, 12, 13, 14) de l'assemblage (9a, 9b) formant ledit au moins un élément d'habillage (2a, 2b, 2c).

7. Pièce d'horlogerie (1) selon l'une quelconque des revendications précédentes, **caractérisée en ce que** la première couche (10) est rigide relativement aux autres couches (11, 12, 13, 14) comprises dans l'assemblage (9a, 9b) qui sont souples.

8. Pièce d'horlogerie (1) selon l'une quelconque des revendications précédentes, **caractérisée en ce que** les sources lumineuses ponctuelles (4) sont configurées de telle sorte que chaque zone ponctuelle ou quasi-ponctuelle (28) de la face visible (20a) susceptible d'être illuminée est apte à être éclairée par une seule source lumineuse ponctuelle (4) monochrome.

9. Pièce d'horlogerie (1) selon l'une quelconque des revendications 1 à 7, **caractérisée en ce que** les sources lumineuses ponctuelles (4) sont configurées de telle sorte que chaque zone ponctuelle ou quasi-ponctuelle (28) de la face visible (20a) susceptible d'être illuminée est apte à être éclairée par plusieurs sources lumineuse ponctuelles (4) présentant des couleurs lumineuses distinctes.

10. Pièce d'horlogerie (1) selon l'une quelconque des revendications précédentes, **caractérisée en ce que** ledit au moins un élément d'habillage (2a, 2b, 2c) est choisi par un des éléments suivants : un fond (24), une carrure (23), un cadran (32), un brin de bracelet (30), une lunette (26), un réhaut, un bouton-poussoir, une couronne de remontoir et/ou une couronne de remontoir munie d'une coiffe.
